# FASCICULE DE BREVET EUROPEEN

(11) **EP 3 449 020 B1**
(45) Date de publication et mention de la délivrance du brevet: **18.11.2020**
(21) Numéro de dépôt: 17725671.6
(22) Date de dépôt: 27.04.2017
(51) Int. Cl.: C21D 9/00, F27D 3/02, F27D 5/00

(54) **OUTILLAGE DE CHARGEMENT A GRANDE MODULARITE**
HOCH MODULARE LADEWERKZEUGE
HIGHLY MODULAR LOADING TOOLS

(30) Priorité: 28.04.2016 FR 1653808
(43) Date de publication de la demande: 06.03.2019
(73) Titulaire: ArianeGroup SAS, 75015 Paris (FR)
(72) Inventeur: GUICHARD, Frédéric, 33160 Saint-Medard En Jalles (FR); MAUMUS, Jean-Pierre, 33160 Saint-Medard En Jalles (FR); CHAUFFAILLE, Sébastien, 33185 Le Haillan (FR)
(74) Mandataire: Cabinet Beau de Loménie
(86) Numéro de dépôt international: PCT/FR2017/050993
(87) Numéro de publication internationale: WO 2017/187089

(56) Documents cités:
- EP-A1- 2 910 884
- WO-A1-2015/122912
- DE-B3- 10 312 802
- FR-A1- 2 319 866
- US-A1- 2009 084 470
- US-A1- 2015 232 959
- US-B1- 6 644 966

## Description

### Arrière-plan de l'invention

La présente invention concerne les outillages de chargement utilisés pour supporter des pièces en matériau métalliques, lors de traitements thermiques ou thermochimiques de ces pièces tels que des recuits, traitements thermiques par diffusion, traitements de conversion chimique, formation de revêtement de surface etc.

Le chargement des pièces dans un four pour leur traitement thermique ou thermochimique peut être réalisé « en vrac », c'est-à-dire dans des paniers dans lesquels le pièces sont mélangées. Si ce type d'outillage de chargement permet de traiter des pièces de formes et ou de tailles différentes et d'avoir un taux de chargement du four relativement important, elle ne permet pas de garantir un traitement homogène des pièces. En effet, dans le cas de l'utilisation d'une phase gazeuse lors du traitement thermique, celle-ci ne circule pas de façon homogène vis-à-vis de chaque pièce, ce qui entraîne une hétérogénéité dans le traitement des pièces d'un même lot.

Un autre solution consiste à utiliser des outillages de chargement présentant des dispositifs de support spécifiques permettant de supporter de manière ordonnée des pièces ayant des formes et/ou des dimensions similaires. Si cette deuxième solution permet de traiter les pièces de manière plus homogène, elle est toutefois pénalisante en termes de capacité de chargement du four.

Or, il existe un besoin pour optimiser le taux de chargement d'un four de traitement tout en assurant un traitement homogène des pièces.

Des outillages de chargement destinés à supporter des pièces métalliques en vue d'un traitement notamment thermique, sont divulgués dans les documents FR 2 319 866, WO 2015/122912, US 2015/232959, EP 2 910 844 et US 6 644 966.

### Objet et résumé de l'invention

A cet effet, la présente invention propose un outillage de chargement pour le traitement thermochimique de pièces, l'outillage comprenant au moins des premier et deuxième étages de chargement empilés l'un sur l'autre de manière amovible, chaque étage de chargement comprenant un bâti s'étendant suivant un plan horizontal, le bâti étant supporté par quatre pieds s'étendant suivant une direction verticale, les pieds du deuxième étage de chargement reposant sur les pieds du premier étage de chargement, et une pluralité de bras de support solidaires du bâti, la pluralité de bras de support du premier étage de chargement présentant une disposition différente de la disposition de la pluralité de bras de support du deuxième étage de chargement
caractérisé en ce que le bâti du premier étage de chargement comprend une traverse centrale, une première pluralité de bras de support s'étendant de chaque côté de la traverse centrale dans une direction parallèle au plan horizontal du bâti, les bras de la première pluralité de bras de support présentant une extrémité libre et étant espacés les uns des autres par une première distance et en ce que le bâti du deuxième étage de chargement comprend une traverse centrale, une deuxième pluralité de bras de support présentant une extrémité libre et s'étendant de chaque côté de la traverse centrale dans une direction parallèle au plan horizontal du bâti, les bras de la deuxième pluralité de bras de support étant espacés les uns des autres par une deuxième distance différente de la première distance..

L'outillage de chargement de la présente invention est notamment avantageux en ce qu'il offre une grande modularité entre chaque étage chargement, les bras de support de chaque étage de chargement pouvant être adaptés pour supporter des pièces présentant des dimensions et/ou des formes différentes de celles des pièces supportées par un autre étage de chargement. Il est ainsi possible d'avoir dans un même chargement constitué par l'outillage de chargement de l'invention, des pièces ayant des formes et/ou des dimensions différentes et, par conséquent, d'optimiser le taux de chargement du four tout en permettant un traitement homogène de chaque pièce.

En outre, cette configuration de l'outillage de chargement permet de former un chargement avec des pièces suspendues ayant des formes et/ou des dimensions différentes.

Selon une première caractéristique particulière de l'outillage de chargement de l'invention, chaque étage de chargement est réalisé en matériau composite carbone/carbone. Dans ce cas, les bras de support de la pluralité de bras de support de chaque étage de chargement peuvent être revêtus d'une couche d'un matériau céramique.

Chaque étage de chargement peut être également réalisé en matériau composite à matrice céramique, en matériau composite à matrice céramique de type Oxyde/Oxyde ou en matériau métallique résistant aux hautes températures.

Selon une deuxième caractéristique particulière de l'outillage de chargement l'invention, la partie inférieure des pieds de chaque de chargement est configurée pour s'emboîter avec la partie supérieure des pieds de chaque étage de chargement. On facilite ainsi la mise en place et le maintien en pile des étages de chargement.

Selon une troisième caractéristique particulière de l'outillage de chargement l'invention, les pieds de chaque étage de chargement sont réglables en hauteur.

Selon une quatrième caractéristique particulière de l'outillage de chargement l'invention, les bras de support de chaque étage de chargement sont fixés de manière amovible sur le bâti dudit étage de chargement. Cela permet d'augmenter encore la modularité de l'outillage de chargement.

L'invention a également pour objet une installation de traitement thermique ou thermochimique de pièces comprenant une chambre de traitement et un ou plusieurs outillages de chargement selon l'invention présents dans ladite chambre de traitement, le ou les étages de chargement de l'outillage de chargement supportant chacun des pièces ayant des formes ou des dimensions différentes.

### Brève description des dessins

D'autres caractéristiques et avantages de l'invention ressortiront de la description suivante de modes particuliers de réalisation de l'invention, donnés à titre d'exemples non limitatifs, en référence aux dessins annexés, sur lesquels :
- la figure 1 est une vue éclatée d'un outillage de chargement selon un mode de réalisation de l'invention ;
- la figure 2 est une vue schématique en perspective de l'outillage de maintien de la figure 1 une fois monté et chargé de pièces ;
- la figure 3 est une vue éclatée d'un outillage de chargement selon un autre mode de réalisation de l'invention ;
- la figure 4 est une vue schématique en perspective de l'outillage de maintien de la figure 3 une fois monté et chargé de pièces ;
- la figure 5 est une vue schématique en coupe d'une installation de traitement thermique ou thermochimique selon un mode de réalisation de l'invention.

### Description détaillée d'un mode de réalisation

L'invention s'applique d'une manière générale aux outillages de chargement permettant de supporter des pièces en matériau métallique lors de traitements thermiques ou thermochimiques de ces pièces dans des installations ou fours de traitement.

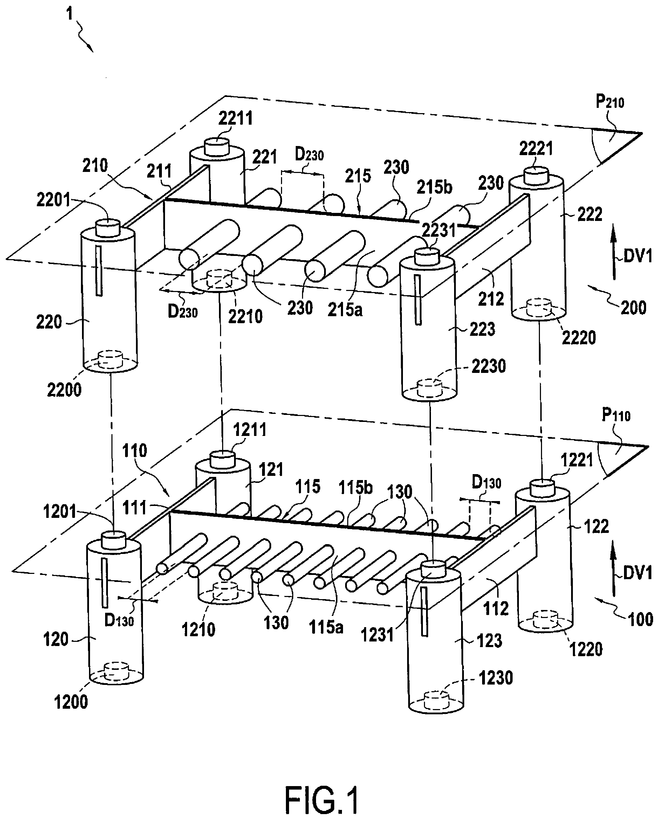

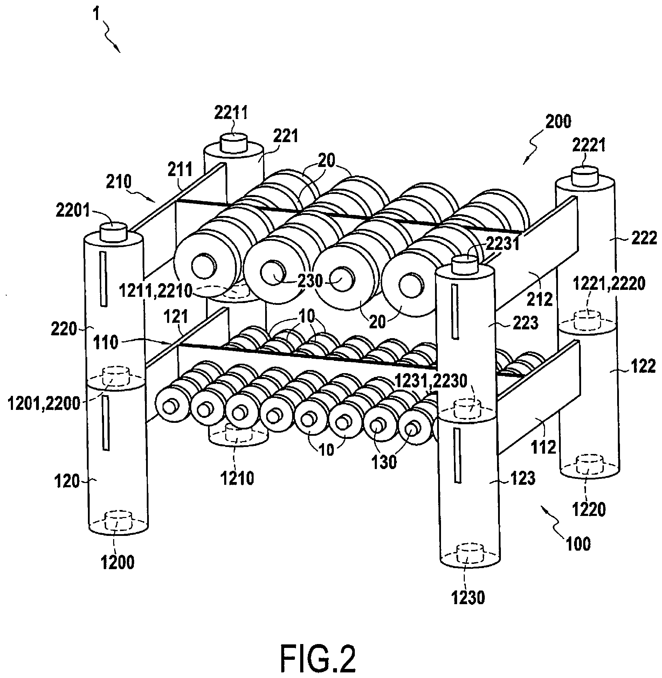

Les figures 1 et 2 représentent un outillage de chargement 1 conformément à un mode de réalisation de l'invention. L'outillage de chargement 1 comprend ici un premier étage de chargement 100 et un deuxième étage de chargement 200 qui est destiné à être monté sur le premier étage 100. Le premier étage 100 comprend un bâti 110 qui est supporté par quatre pieds 120, 121, 122 et 123. Plus précisément, le bâti 110 comprend une première traverse latérale 111 qui relie les pieds 120 et 121 entre eux et une deuxième traverse latérale 112 qui relie les pieds 122 et 123 entre eux. Une traverse centrale 115 s'étend entre les deux traverses latérales 111 et 112 et est solidaire de celles-ci. Le bâti 110 présente une forme rectangulaire. Le bâti 110 s'étend suivant un plan P110 horizontal, les pieds 120 à 123 s'étendant dans une direction verticale DV1 perpendiculaire au plan P₁₁₀. Des bras de support 130 s'étendent respectivement de chaque côté de la traverse centrale 115. Plus précisément, la traverse centrale 115 comporte du côté de sa première face 115a une première rangée de bras de support 130 et du côté de sa deuxième face 115b une deuxième rangée de bras de support 130. Les bras 130 s'étendent chacun dans une direction parallèle au plan horizontal P₁₁₀ du bâti 110. Les bras 130 sont espacés les uns des autres d'une distance D₁₃₀ déterminée en fonction des dimensions et/ou de la forme des pièces qu'ils sont destinés à supporter.

Le deuxième étage 200 comprend un bâti 210 supporté par quatre pieds 220, 221, 222 et 223, le bâti 210 comprenant une première traverse latérale 211 reliant les pieds 220 et 221 entre eux et une deuxième traverse latérale 212 reliant les pieds 222 et 223 entre eux. Une traverse centrale 215 s'étend entre les deux traverses latérales 211 et 212 et est solidaire de celles-ci. Le bâti 210 présente une forme rectangulaire. Le bâti 210 s'étend suivant un plan P₂₁₀ horizontal, les pieds 220 à 223 s'étendant dans la direction verticale DV1 perpendiculaire au plan P₂₁₀. Des bras de support 230 s'étendent respectivement de chaque côté de la traverse centrale 215. Plus précisément, la traverse centrale 215 comporte du côté de sa première face 215a une première rangée de bras de support 230 et du côté de sa deuxième face 215b une deuxième rangée de bras de support 230. Les bras 230 s'étendent chacun dans une direction parallèle au plan horizontal P₂₁₀ du bâti 210. Les bras 230 sont espacés les uns des autres d'une distance D₂₃₀ déterminée en fonction des dimensions et/ou de la forme des pièces qu'ils sont destinés à supporter.

Dans le mode réalisation décrits dans les figures 1 et 2 les bras 130 du premier étage de chargement 100 présentent une disposition différente des bras 230 du deuxième étage de chargement 200 en ce que les bras 230 sont espacés les uns des autres d'une distance D₂₃₀ qui est supérieure à la distance D₁₃₀ d'espacement entre les bras 130 du premier étage de chargement, le deuxième étage de chargement 200 comportant alors un nombre de bras de support 230 inférieur au nombre de bras de support 130 présents sur le premier étage de chargement.

Ainsi, l'outillage de chargement 1 est apte à supporter des pièces de dimensions et/ou de formes différentes. En effet, comme illustré sur la figure 2, le deuxième étage de chargement 200 est chargé avec des pièces annulaires 20 qui présentent un diamètre supérieur au diamètre des pièces annulaires 10 qui sont chargées sur le premier étage de chargement 100. En outre, les pièces annulaires 10 et 20 étant supportées par des bras de support horizontaux, elle peuvent être disposées de manière ordonnée les unes à côté des autres sans contact entre les pièces et avec une surface de contact minimisée avec les bras de support, ce qui permet d'assurer un traitement homogène de l'ensemble des pièces supportées par l'outillage de chargement.

Par ailleurs, comme illustré sur la figure 1, les pieds 120 à 123 du premier étage de chargement 100 comprennent chacun sur leur partie inférieure respectivement des évidements circulaires 1200, 1210, 1220 et 1230 et sur leur partie supérieure des éléments de centrage circulaires 1201, 1211, 1221 et 1231 faisant saillie à la surface supérieure des pieds. De même, les pieds 220 à 223 du deuxième étage de chargement 200 comprennent chacun sur leur partie inférieure respectivement des évidements circulaires 2200, 2210, 2220 et 2230 et sur leur partie supérieure des éléments de centrage circulaires 2201, 2211, 2221 et 2231 faisant saillie à la surface supérieure des pieds. Les évidements circulaires présents dans les pieds d'un étage de chargement, ici les évidements 2200, 2201, 2220 et 2230 des pieds 220 à 223 du deuxième étage de chargement 200, sont destinés à s'emboîter avec les éléments de centrage circulaires des pieds d'un autre étage de chargement, ici les éléments de centrage circulaires 1201, 1211, 1221 et 1231 du premier étage de chargement 100, sur lequel l'étage de chargement est déposé. On facilite ainsi à la fois le positionnement des étages de chargement lors de leur empilement et leur maintien en position les uns sur les autres dans l'empilement de l'outillage de chargement. Les éléments utilisés dans les parties inférieures et supérieures des pieds de chaque étage de chargement permettant d'emboîter les pieds d'un chargement avec les pieds d'un autre chargement adjacent dans l'empilement peuvent bien entendu avoir d'autres formes que celle décrites ci-avant.

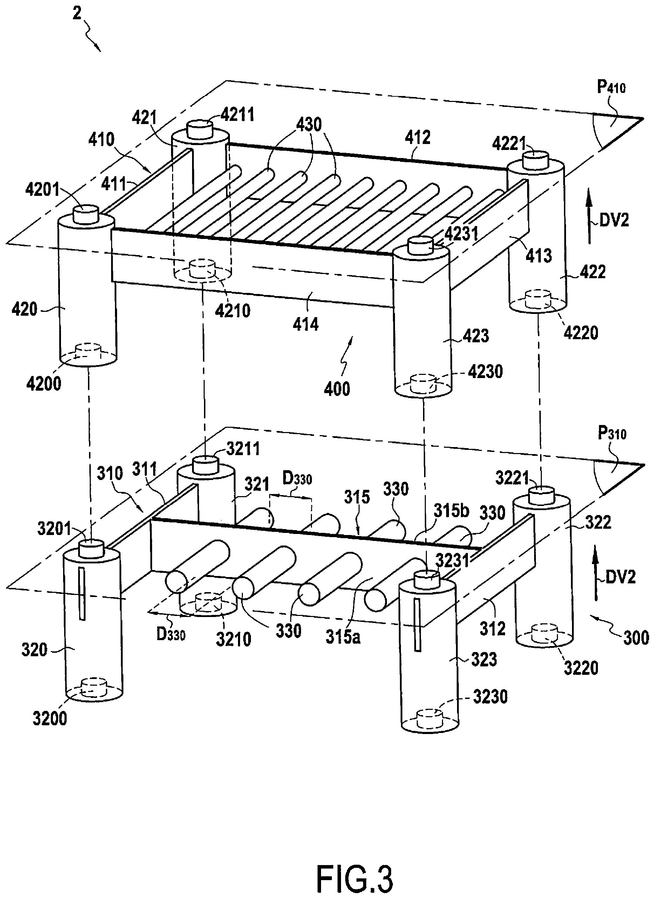

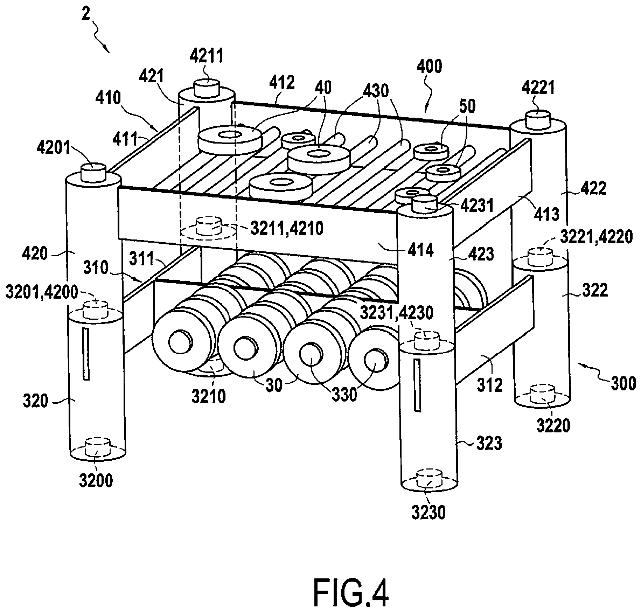

Les figures 3 et 4 représentent un outillage de chargement 2 conformément à un autre mode de réalisation de l'invention. L'outillage de chargement 2 diffère de l'outillage de chargement 1 décrit en relation avec les figures 1 et 2 en ce que le deuxième étage de chargement définit un plateau de chargement horizontal. L'outillage de chargement 2 comprend ici un premier étage de chargement 300 et un deuxième étage de chargement 400 qui est destiné à être monté sur le premier étage 200. Le premier étage 300 comprend un bâti 310 qui est supporté par quatre pieds 320, 321, 322 et 323, le bâti 310 comprend une première traverse latérale 311 qui relie les pieds 320 et 321 entre eux et une deuxième traverse latérale 312 qui relie les pieds 322 et 323 entre eux. Une traverse centrale 315 s'étend entre les deux traverses latérales 311 et 312 et est solidaire de celles-ci. Le bâti 310 présente une forme rectangulaire. Le bâti 310 s'étend suivant un plan P₃₁₀ horizontal, les pieds 320 à 323 s'étendant dans une direction verticale DV2 perpendiculaire au plan P₃₁₀. Des bras de support 330 s'étendent respectivement de chaque côté de la traverse centrale 315. Plus précisément, la traverse centrale 315 comporte du côté de sa première face 315a une première rangée de bras de support 330 et du côté de sa deuxième face 315b une deuxième rangée de bras de support 330. Les bras 330 s'étendent chacun dans une direction parallèle au plan horizontal P₃₁₀ du bâti 310. Les bras 330 sont espacés les uns des autres d'une distance D₃₃₀ déterminée en fonction des dimensions et/ou de la forme des pièces qu'ils sont destinés à supporter.

Le deuxième étage 400 comprend un bâti 410 qui est supporté par quatre pieds 420, 421, 422 et 423. Plus précisément, le bâti 410 comprend une première traverse latérale 411 qui relie les pieds 420 et 421 entre eux, une deuxième traverse latérale 412 qui relie les pieds 421 et 422 entre eux, une troisième traverse latérale 413 qui relie les pieds 422 et 423 entre eux et une quatrième traverse latérale 414 qui relie les pieds 423 et 420 entre eux. Le bâti 410 présente une forme rectangulaire. Le bâti 410 s'étend suivant un plan P₄₁₀ horizontal, les pieds 420 à 423 s'étendant dans une direction verticale DV2 perpendiculaire au plan P₄₁₀. Des bras de support 430 s'étendent respectivement entre les deuxième et quatrième traverses latérales 412 et 414. Les bras 430 remplissent l'espace délimité entre les quatre traverses 411 à 414 du bâti 410 de manière à former un plateau de chargement horizontal 440.

Ainsi, l'outillage de chargement 2 est apte à supporter des pièces de dimensions et/ou de formes différentes. En effet, comme illustré sur la figure 4, le premier étage de chargement 300 est adapté pour être chargé des pièces annulaires 30 présentant un diamètre déterminé tandis que le deuxième étage 400 est chargé avec des pièces annulaires 40 et 50 présentant entre elles et avec les pièces 30 des diamètres différents.

Dans le deuxième étage de chargement 400, les pièces sont placées à l'horizontal sur la plateau de chargement 440, ce qui permet de charger cet étage avec des pièces ayant des dimensions et/ou des formes différentes. En outre, le maintien à l'horizontal des pièces sur l'étage de chargement 400 permet de traiter thermiquement des pièces à des températures proches de la température de fluage du matériau en minimisant les risques de déformation desdites pièces.

Par ailleurs, comme illustré sur la figure 3, les pieds 320 à 323 du premier étage de chargement 300 comprennent chacun sur leur partie inférieure respectivement des évidements circulaires 3200, 3210, 3220 et 3230 et sur leur partie supérieure des éléments de centrage circulaires 3201, 3211, 3221 et 31231 faisant saillie à la surface supérieure des pieds. De même, les pieds 420 à 423 du deuxième étage de chargement 200 comprennent chacun sur leur partie inférieure respectivement des évidements circulaires 4200, 4210, 4220 et 4230 et sur leur partie supérieure des éléments de centrage circulaires 4201, 4211, 4221 et 4231 faisant saillie à la surface supérieure des pieds. Les évidements circulaires présents dans les pieds d'un étage de chargement, ici les évidements 4200, 4201, 4220 et 4230 des pieds 420 à 423 du deuxième étage de chargement 400, sont destinés à s'emboîter avec les éléments de centrage circulaires des pieds d'un autre étage de chargement, ici les éléments de centrage circulaires 3201, 3211, 3221 et 3231 du premier étage de chargement 100, sur lequel l'étage de chargement est déposé. On facilite ainsi à la fois le positionnement des étages de chargement lors de leur empilement et leur maintien en position les uns sur les autres dans l'empilement de l'outillage de chargement. Les éléments utilisés dans les parties inférieures et supérieures des pieds de chaque étage de chargement permettant d'emboîter les pieds d'un chargement avec les pieds d'un autre chargement adjacent dans l'empilement peuvent bien entendu avoir d'autres formes que celle décrites ci-avant.

L'outillage de chargement de l'invention n'est pas limité aux modes de réalisation décrits ci-avant. En effet, l'outillage selon l'invention peut comprendre un nombre plus important d'étages de chargement, les étages empilés pouvant correspondre indifféremment à des étages à chargement vertical tels que les étages de chargement 100, 200 et 300 décrits ci-avant ou à des étages à chargement horizontal tel que l'étage de chargement 400 décrit ci-avant. La modularité de l'outillage de chargement de l'invention permet d'envisager un grand nombre de configurations entre ces deux types d'étages de chargement. Les pièces supportées par les étages de chargement peuvent avoir des formes différentes d'une forme annulaire.

Par ailleurs, les pieds de chaque étage de chargement peuvent être configurés pour être réglables en hauteur et permettre ainsi d'ajuster la hauteur des bras de support par rapport au sol ou à la l'étage de chargement sous-jacent. Le réglage en hauteur des pieds peut être mis en œuvre par exemple au moyen de pieds télescopiques ou d'entretoises ajoutées sur les pieds.

Conformément à la présente invention, les éléments constituant l'outillage de chargement de la présente invention, à savoir les étages de chargement, sont réalisés en matériau composite thermostructural qui résiste à des températures plus élevées que les matériaux métalliques tels que l'acier.

Les étages de chargement constitutifs de l'outillage de chargement sont réalisés de préférence en matériau composite carbone/carbone (C/C) qui, de façon connue, est un matériau formé d'un renfort en fibres de carbone densifié par une matrice en carbone et qui peut éventuellement être muni d'un revêtement comme par exemple un dépôt céramique (exemple SiC). Ces éléments peuvent être également réalisés en matériau composite à matrice céramique (CMC) qui est un matériau formé d'un renfort en fibres de carbone ou céramique densifié par une matrice au moins partiellement céramique, comme l'un des matériaux composite CMC suivants :
- carbone-carbone/carbure de silicium (C/C-SiC) correspondant à un matériau formé d'un renfort en fibres de carbone et densifié par une matrice comprenant une phase carbone et une phase carbure de silicium,
- carbone-carbure de silicium (C/SiC) qui est un matériau formé d'un renfort en fibres de carbone densifié par une matrice en carbure de silicium,
- carbure de silicium-carbure de silicium (SiC/SiC) correspondant à un matériau formé d'un renfort en fibres de carbure de silicium densifié par une matrice en carbure de silicium
- matériau CMC de type oxyde/oxyde correspondant à un matériau formé d'un renfort en fibres d'oxyde réfractaire, par exemple des fibres à base d'alumine Al₂O₃, densifié par une matrice en oxyde réfractaire.

La fabrication de pièces en matériau composite constituées d'un renfort fibreux densifié par une matrice est bien connue. Elle comprend principalement la réalisation d'une structure fibreuse, ici en fibres de carbone ou céramique, la mise en forme de la structure dans une forme voisine de celle de la pièce à fabriquer (préforme fibreuse) et la densification de la préforme par la matrice.

La préforme fibreuse constitue le renfort de la pièce dont le rôle est essentiel vis-à-vis des propriétés mécaniques. La préforme est obtenue à partir de textures fibreuses en fibres de carbone ou céramique. Les textures fibreuses utilisées peuvent être de diverses natures et formes telles que notamment:
- tissu bidimensionnel (2D),
- tissu tridimensionnel (3D) obtenu par tissage 3D ou multicouches,
- tresse,
- tricot,
- feutre,
- nappe unidirectionnelle (UD) de fils ou câbles ou nappes multidirectionnelle (nD) obtenue par superposition de plusieurs nappes UD dans des directions différentes et liaison des nappes UD entre elles par exemple par couture, par agent de liaison chimique ou par aiguilletage.

On peut aussi utiliser une structure fibreuse formée de plusieurs couches superposées de tissu, tresse, tricot, feutre, nappes, câbles ou autres, lesquelles couches sont liées entre elles par exemple par couture, par implantation de fils ou d'éléments rigides ou par aiguilletage.

La mise en forme est réalisée par tissage, empilage, aiguilletage de strates bidimensionnelles/tridimensionnelles ou de nappes de câbles, etc.

La préforme fibreuse est ensuite densifiée, de façon bien connue, par voie liquide et/ou gazeuse.

La densification par voie liquide consiste à imprégner la préforme par une composition liquide contenant un précurseur du matériau de la matrice. Le précurseur se présente habituellement sous forme d'un polymère, tel qu'une résine, éventuellement dilué dans un solvant. La transformation du précurseur en carbone ou céramique est réalisée par traitement thermique, après élimination du solvant éventuel et réticulation du polymère. Plusieurs cycles d'imprégnation successifs peuvent être réalisés pour parvenir au degré de densification souhaité.

Une résine précurseur de carbone peut être par exemple une résine de type phénolique.

Une résine précurseur de céramique peut être par exemple une résine polycarbosilane précurseur de carbure de silicium (SiC), ou une résine polysiloxane précurseur de SiCO, ou une résine polyborocarbosilazane précurseur de SiCNB, ou une résine polysilazane (SiCN).

Les opérations d'imprégnation et de polymérisation de résine précurseur de carbone et/ou de résine précurseur de céramique peuvent être répétées plusieurs fois si nécessaire pour obtenir des caractéristiques mécaniques déterminées.

La densification de la préforme fibreuse peut-être également réalisée, de façon connue, par voie gazeuse par infiltration chimique en phase vapeur de la matrice (CVI). La préforme fibreuse correspondant à la structure à réaliser est placée dans un four dans lequel est admise une phase gazeuse réactionnelle. La pression et la température régnant dans le four et la composition de la phase gazeuse sont choisies de manière à permettre la diffusion de la phase gazeuse au sein de la porosité de la préforme pour y former la matrice par dépôt, au cœur du matériau au contact des fibres, d'un matériau solide résultant d'une décomposition d'un constituant de la phase gazeuse ou d'une réaction entre plusieurs constituants, contrairement aux conditions de pression et températures propres aux procédés CVD ("Chemical Vapor Déposition") qui conduisent exclusivement à un dépôt à la surface du matériau.

La formation d'une matrice carbone peut être obtenue avec des gaz hydrocarbures tels que méthane et/ou propane donnant le carbone par craquage tandis qu'une matrice SiC peut être obtenue avec du méthyltrichlorosilane (MTS) donnant du SiC par décomposition du MTS.

Dans le cas d'un matériau C/C-SiC, la première phase carbone peut être formée avec des gaz hydrocarbures donnant le carbone par craquage, la deuxième phase SiC étant ensuite déposée sur la première phase carbone, par exemple par décomposition du MTS.

Une densification combinant voie liquide et voie gazeuse peut être également utilisée pour faciliter la mise en œuvre, limiter les coûts et les cycles de fabrication tout en obtenant des caractéristiques satisfaisantes pour l'utilisation envisagée.

Des lumières peuvent être usinées dans les éléments constitutifs des étages de chargement, comme par exemple dans les pieds et les traverses des étages, afin d'en alléger encore la masse et d'en réduire l'inertie thermique.

Dans le cas de la réalisation des étages de chargement en matériau composite C/C, les bras de support peuvent être revêtus d'une couche de matériau céramique, par exemple de la mullite ou de l'oxyde d'yttrium (Y₂O₃), afin d'éviter une éventuelle carburation ou un eutectique des pièces en contact avec les bras. Selon une variante de réalisation, les bras de support peuvent comprendre un insert en matériau métallique sur lequel reposent les pièces de manière à éviter un contact direct entre les pièces et le carbone des bras.

Les étages de chargement de l'outillage de chargement de l'invention peuvent être également réalisés à partir d'alliage métallique résistants aux hautes températures tels que les aciers réfractaires Fe-Cr-Ni Z40 CN 25-20 (AFNOR) & HK (ASTM), Z25 NCNb 38-18-02 (AFNOR) & HU 25 (ASTM) et Z60 NC 52-17 (AFNOR).

Les étages de chargement peuvent être fabriqués en une seule pièce ou en plusieurs éléments individuels, par exemple les pieds, les traverses et les bras de supports, qui sont assemblés entre eux pour former un étage de chargement. Dans ce dernier cas, les bras de support peuvent être montée de manière amovible sur la traverse centrale, ce qui permet d'avoir des bras de support interchangeables et de sélectionner des bras de support adaptés aux pièces à supporter.

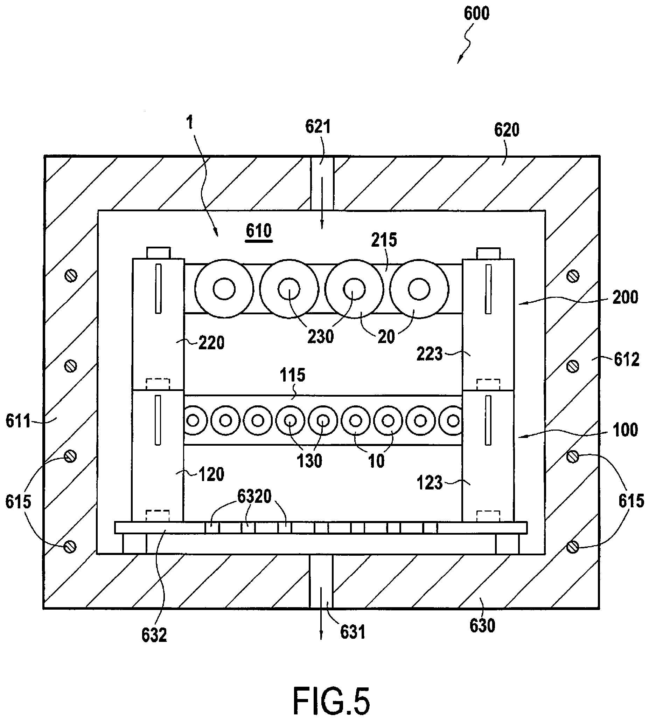

La figure 5 représente schématiquement une installation ou four de traitement thermique ou thermochimique 600 qui est chargé ici avec l'outillage de chargement 1 de la figure 2 comprenant les pièces 10 et 20. L'installation 600 comprend une chambre de traitement parallélépipédique 610 délimitée par des parois latérales, la figure 2 montrant deux parois 611 et 612 s'étendent dans la direction transversale de la chambre de traitement. Chacune des parois latérales est munie de moyens de chauffage, ici des résistances électriques 615 noyées dans chacune des parois. La chambre de traitement est fermée dans sa partie supérieure par un couvercle démontable 620 muni d'une conduite d'admission de gaz 621 permettant l'introduction éventuel d'un ou plusieurs matériaux d'apport sous forme gazeuse lors du traitement thermique des pièces. Les gaz sont extraits au niveau du fond 630 de l'installation par une conduites d'évacuation 631 qui est reliée à des moyens d'aspiration (non représentés). Le fond 630, qui ferme la chambre de réaction dans sa partie inférieure, comporte une plaque 632 comportant une pluralité d'orifices d'évacuation de gaz 6320 et sur laquelle l'outillage de chargement 1 est destiné à reposer. Le nombre de conduites d'admission de gaz 621 et de conduites d'évacuation 631 est déterminé en fonction des dimensions de la chambre de traitement à alimenter.

Bien entendu, en fonction du volume utile disponible dans la chambre de traitement, un outillage de chargement plus volumineux, c'est-à-dire comportant un nombre d'étages de chargement plus important, peut être placé dans celle-ci. De même, plusieurs outillages de chargement comportant chacun plusieurs étages de chargement peuvent être placés les uns à côté des autres dans la chambre de traitement si le volume de cette dernière le permet.

## Revendications

1. Outillage de chargement (1) pour le traitement thermochimique de pièces (10, 20), l'outillage comprenant au moins des premier et deuxième étages de chargement (100, 200) empilés l'un sur l'autre de manière amovible, chaque étage de chargement (100 ; 200) comprenant un bâti (110 ; 210) s'étendant suivant un plan horizontal (P₁₁₀ ; P₂₁₀), le bâti étant supporté par quatre pieds (120, 121, 122, 123 ; 220, 221, 222, 223) s'étendant suivant une direction verticale (DV1), les pieds (220, 221, 222, 223) du deuxième étage de chargement (200) reposant sur les pieds (120, 121, 122, 123) du premier étage de chargement (100), et une pluralité de bras de support (130 ; 230) solidaires du bâti (110 ; 210), la pluralité de bras de support (130) du premier étage de chargement (100) présentant une disposition différente de la disposition de la pluralité de bras de support (230) du deuxième étage de chargement (200).
**caractérisé en ce que** le bâti (110) du premier étage de chargement (100) comprend une traverse centrale (115), une première pluralité de bras de support (130) s'étendant de chaque côté de la traverse centrale dans une direction parallèle au plan horizontal (P110) du bâti (110), les bras (130) de la première pluralité de bras de support présentant une extrémité libre et étant espacés les uns des autres par une première distance (D130) et dans lequel le bâti (210) du deuxième étage de chargement (200) comprend une traverse centrale (215), une deuxième pluralité de bras (230) de support s'étendant de chaque côté de la traverse centrale dans une direction parallèle au plan horizontal (P210) du bâti (210), les bras (230) de la deuxième pluralité de bras de support présentant une extrémité libre et étant espacés les uns des autres par une deuxième distance (D230) différente de la première distance (D130).

2. Outillage selon la revendication 1, dans lequel chaque étage de chargement (100 ; 200) est réalisé en matériau composite carbone/carbone.

3. Outillage selon la revendication 2, dans lequel au moins les bras de support (130 ; 230) de la pluralité de bras de support de chaque étage de chargement (100 ; 200) sont revêtus d'une couche d'un matériau céramique.

4. Outillage selon la revendication 1, dans lequel chaque étage de chargement (100 ; 200) est réalisé en matériau composite à matrice céramique ou en matériau composite à matrice céramique de type Oxyde/Oxyde.

5. Outillage selon l'une quelconque des revendications 1 à 4, dans lequel la partie inférieure des pieds de chaque étage de chargement est configurée pour s'emboîter avec la partie supérieure des pieds de chaque étage de chargement.

6. Outillage selon l'une quelconque des revendications 1 à 5, dans lequel les pieds (120, 121, 122, 123) de chaque étage de chargement sont réglables en hauteur.

7. Outillage selon l'une quelconque des revendications 1 à 6, dans lequel les bras de support (130) de chaque étage de chargement (100) sont fixés de manière amovible sur le bâti (110) dudit étage de chargement.

8. Installation de traitement thermique ou thermochimique (600) de pièces (10, 20) comprenant une chambre de traitement (610) et un ou plusieurs outillages de chargement (1) selon l'une quelconque des revendications 1 à 7 présents dans ladite chambre de traitement, le ou les étages de chargement (100, 200) de l'outillage de chargement (1) supportant chacun des pièces (10, 20) ayant des formes ou des dimensions différentes.

## Patentansprüche

1. Werkzeug zur Beschickung (1) für die thermochemische Behandlung von Werkstücken (10, 20), wobei das Werkzeug zumindest eine erste und zweite Etage zur Beschickung (100, 200) umfasst, die auf abnehmbare Weise übereinander gestapelt sind, wobei jede Etage zur Beschickung (100; 200) einen Rahmen (110; 210), der sich einer horizontalen Ebene (P₁₁₀; P₂₁₀) folgend erstreckt, umfasst, wobei der Rahmen von vier Füßen (120, 121, 122, 123; 220, 221, 222, 223) getragen wird, die sich einer vertikalen Richtung (DV1) folgend erstrecken, wobei die Füße (220, 221, 222, 223) der zweiten Etage zur Beschickung (200) auf den Füßen (120, 121, 122, 123) der ersten Etage zur Beschickung (100) ruhen, und mehrere Trägerarme (130; 230), die an dem Rahmen (110; 210) befestigt sind, wobei die mehreren Trägerarme (130) der ersten Etage zur Beschickung (100) eine von der Anordnung der mehreren Trägerarme (230) der zweiten Etage zur Beschickung (200) unterschiedliche Anordnung aufweisen,
**dadurch gekennzeichnet, dass** der Rahmen (110) der ersten Etage zur Beschickung (100) einen zentralen Querbalken (115) und mehrere erste Trägerarme (130), die sich von jeder Seite des zentralen Querbalkens in eine Richtung parallel zu der horizontalen Ebene (P110) des Rahmens (110) erstrecken, umfasst, wobei die Arme (130) der mehreren ersten Trägerarme ein freies Ende aufweisen und voneinander um einen ersten Abstand (D130) beabstandet sind, und wobei der Rahmen (210) der zweiten Etage zur Beschickung (200) einen zentralen Querbalken (215) und mehrere zweite Trägerarme (230), die sich von jeder Seite des zentralen Querbalkens in eine Richtung parallel zu der horizontalen Ebene (P210) des Rahmens (210) erstrecken, umfasst, wobei die Arme (230) der mehreren zweiten Trägerarme ein freies Ende aufweisen und voneinander um einen zweiten Abstand (D230), der sich von dem ersten Abstand (D130) unterscheidet, beabstandet sind.

2. Werkzeug nach Anspruch 1, wobei jede Etage zur Beschickung (100; 200) aus einem Kohlenstoff/Kohlenstoff Verbundmaterial hergestellt ist.

3. Werkzeug nach Anspruch 2, wobei zumindest die Trägerarme (130; 230) der mehreren Trägerarme einer jeden Etage zur Beschickung (100; 200) mit einer Schicht aus Keramikmaterial beschichtet sind.

4. Werkzeug nach Anspruch 1, wobei jede Etage zur Beschickung (100; 200) aus einem Verbundmaterial mit keramischer Matrix oder einem Verbundmaterial mit keramischer Matrix vom Typ Oxid/Oxid hergestellt ist.

5. Werkzeug nach einem der Ansprüche 1 bis 4, wobei der untere Teil der Füße einer jeden Etage zur Beschickung so ausgestaltet ist, dass er mit dem oberen Teil der Füße einer jeden Etage zur Beschickung ineinandergreift.

6. Werkzeug nach einem der Ansprüche 1 bis 5, wobei die Füße (120, 121, 122, 123) einer jeden Etage zur Beschickung in der Höhe einstellbar sind.

7. Werkzeug nach einem der Ansprüche 1 bis 6, wobei die Trägerarme (130) einer jeden Etage zur Beschickung (100) auf abnehmbare Weise an dem Rahmen (110) der Etage zur Beschickung fixiert sind.

8. Anlage zur Wärme- oder thermochemischen Behandlung (600) von Werkstücken (10, 20), umfassend eine Kammer zur Behandlung (610) und ein oder mehrere Werkzeuge zur Beschickung (1) nach einem der Ansprüche 1 bis 7, die in der Kammer zur Behandlung vorhanden sind, wobei die eine oder die mehreren Etagen zur Beschickung (100, 200) des Werkzeugs zur Beschickung (1) jedes der Werkstücke (10, 20) tragen, die unterschiedliche Formen oder Dimensionen aufweisen.

## Claims

1. Loading tooling (1) for thermochemical treatment of parts (10, 20), the tooling comprising at least first and second loading stages (100, 200) stacked one on the other in separable manner, each loading stage (100; 200) comprising a rack (110; 210) extending in a horizontal plane (P₁₁₀; P₂₁₀), the rack being supported by four legs (120, 121, 122, 123; 220, 221, 222, 223) extending in a vertical direction (DV1) with the legs (220, 221, 222, 223) of the second loading stage (200) standing on the legs (120, 121, 122, 123) of the first loading stage (100), and the rack (110; 210) having a plurality of support arms (130; 230) secured thereto, with the plurality of support arms (130) of the first loading stage (100) presenting an arrangement that is different from the arrangement of the plurality of support arms (230) of the second loading stage (200);
the tooling being **characterized in that** the rack (110) of the first loading stage (100) comprises a central crossbar (115), a first plurality of support arms (130) extending on either side of the central crossbar in a direction parallel to the horizontal plane (P110) of the rack (110), the arms (130) of the first plurality of support arms each presenting a free end and being spaced apart from one another at a first distance (D130), and wherein the rack (210) of the second loading stage (200) comprises a central crossbar (215), a second plurality of support arms (230) extending on either side of the central crossbar in a direction parallel to the horizontal plane (P210) of the rack (210), the arms (230) of the second plurality of support arms each presenting a free arm and being spaced apart from one another by a second distance (D230) different from the first distance (D130).

2. Tooling according to claim 1, wherein each loading stage (100; 200) is made of carbon/carbon composite material.

3. Tooling according to claim 2, wherein at least the support arms (130; 230) of the plurality of support arms of each loading stage (100; 200) are coated in a layer of ceramic material.

4. Tooling according to claim 1, wherein each loading stage (100; 200) is made of ceramic matrix composite material or of oxide/oxide type ceramic matrix composite material.

5. Tooling according to any one of claims 1 to 4, wherein the bottom portions of the legs of each loading stage is configured to engage with the top portions of the legs of each loading stage.

6. Tooling according to any one of claims 1 to 5, wherein the legs (120, 121, 122, 123) of each loading stage are adjustable in height.

7. Tooling according to any one of claims 1 to 6, wherein the support arms (130) of each loading stage (100) are separably fastened to the rack (110) of said loading stage.

8. An installation (600) for heat treatment or thermochemical treatment of parts (10, 20), the installation comprising a treatment chamber (610) and one or more stacks of loading tooling (1) according to any one of claims 1 to 7 present in said treatment chamber, the or each loading stage (100, 200) of the loading tooling (1) supporting parts (10, 20) of shapes or dimensions that are different.
